(19) **Europäisches Patentamt**

**European Patent Office**

**Office européen des brevets**

(11) **EP 1 612 539 A1**

(12) **EUROPEAN PATENT APPLICATION**
published in accordance with Art. 158(3) EPC

(43) Date of publication:
**04.01.2006 Bulletin 2006/01**

(51) Int Cl.:
*G01N 21/27* (1980.01)    *G01N 17/00* (1968.09)

(21) Application number: **04717287.9**

(22) Date of filing: **04.03.2004**

(86) International application number:
**PCT/JP2004/002754**

(87) International publication number:
**WO 2004/088288 (14.10.2004 Gazette 2004/42)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **28.03.2003 JP 2003091763**

(71) Applicant: **Stella Chemifa Corporation Osaka-shi, Osaka 541-0047 (JP)**

(72) Inventors:
 • **FUKUDA, Tsuguo Sendai-shi, Miyagi 9818007 (JP)**

 • **KIKUYAMA, Hirohisa, Stella Chemifa K.K. Izumiootsu-shi, Osaka 5950075 (JP)**
 • **SATONAGA, Tomohiko, Stella Chemifa K.K. Izumiootsu-shi, Osaka 5950075 (JP)**
 • **SHOGAMI, Kazuhiko, Stella Chemifa K.K. Izumiootsu-shi, Osaka 5950075 (JP)**

(74) Representative: **Weitzel, Wolfgang Patentanwalt Friedenstrasse 10 89522 Heidenheim (DE)**

(54) **METHOD FOR ANALYZING IMPURITIES (COLOR CENTERS) OF FLUORIDE AND PROCESS FOR PRODUCING MATERIAL FOR GROWING SINGLE CRYSTAL**

(57)    It is aimed at providing an analysis method of impurities (color centers) in fluoride, capable of extremely simply analyzing impurities (color centers) in fluoride. It is also aimed at providing an analysis method of impurities (color centers) in fluoride, for enabling evaluation of an effect by addition of a scavenger, before obtainment of a final single crystal.

There are detected absorption peaks and the like of formed color centers and the like, by irradiating X-rays to an obtained fused material, and by measuring transmittances thereof before and after the irradiation. Based thereon, there are optimized melt conditions of a scavenger and the like, thereby enabling growth of a high purity molten raw material suitable for growth of a single crystal less in X-ray damage.

FIG. 1

**Description**

TECHNICAL FIELD

The present invention relates to an analysis method of impurities (color centers) in fluoride and a production method of a single crystal growth oriented material.

BACKGROUND ART

Highly integrated semiconductor devices have brought about light sources for lithography at shorter wavelengths, in a manner to adopt ArF excimer laser (193nm) and $F_2$ excimer laser (157nm). Utilized as an optical material for a stepper acting as a photolithography machine in the lithography process, is a single crystal of fluoride such as calcium fluoride, barium fluoride, magnesium fluoride, or the like having a higher transmissivity in a shorter wavelength range. In a melt process as a pre-process for growth of single crystal of fluoride, powdery raw material is melted into a block state, thereby decreasing a volume within a crucible occupied by the raw material, so that a load amount of raw material required for growth of a large-sized single crystal can be ensured. Simultaneously with the above, there is loaded a fluorination material called "scavenger" in the melt process so as to remove moisture, oxides, and the like left in or produced in the raw material, thereby achieving higher purity.

Although analyses are performed for impurities, a residual state of scavenger component, an oxygen concentration, and the like as confirmation analyses for higher purity, it is difficult to conduct confirmation and comparison of the particularly important efficiencies of scavengers in terms of an oxygen concentration, such that the confirmation of this condition is to be conducted based on an optical evaluation of physical properties of a single crystal having been already obtained, thereby extremely deteriorating an efficiency.

It is therefore an object of the present invention to provide an analysis method of impurities (color centers) in fluoride, capable of extremely simply analyzing impurities (color centers) in fluoride.

It is a further object to provide an analysis method of impurities (color centers) in fluoride, for enabling evaluation of an effect by addition of a scavenger, before obtainment of a final single crystal.

DISCLOSURE OF INVENTION

The present invention resides in an analysis method of impurities (color centers) in fluoride characterized in that the method comprises the step of:

irradiating X-rays to a material comprising fluoride, and comparing light transmittances of the material before and after the irradiation of X-rays with each other, thereby analyzing impurities (color centers) in the material.

It is characterized in that the fluoride is one of calcium fluoride, barium fluoride, and magnesium fluoride.

It is characterized in that annealing is conducted before the X-ray irradiation. The conduction of annealing brings captured electrons and the like back to original levels, respectively, to resume an initial state. This enables estimation of an affection of impurities (color centers) only.

It is characterized in that the annealing is conducted at 300 to 500°C.

It is characterized in that the annealing is conducted for 30 minutes to 2 hours.

It is characterized in that the material has a surface which is a mirror ground surface.

It is characterized in that the irradiation is conducted for a period of time of 5 minutes or longer.

It is characterized in that the X-rays are provided at an acceleration voltage of 20kV or higher and an electric current of 10mA or more. Adoption of X-rays generated at an acceleration voltage of 20kV or higher, enables study of an X-ray resistant property with higher precision.

It is characterized in that the X-ray irradiation is conducted multiple times.

It is characterized in that the material is obtained from a melt process as a pre-process for a single crystal growth process.

It is characterized in that the impurities are color centers formed by oxides, moisture, and the like.

It is characterized in that in a melt process as a pre-process for a growth process of a single crystal comprising fluoride, taking a part out of the fluoride in a fused state, and bringing the part into an analysis specimen; analyzing impurities (color centers) of the analysis specimen by the above analysis method; and determining an additive condition of a scavenger based on a result of the analysis.

It is characterized in that the fluoride is barium fluoride ($BaF_2$), and the scavenger is lead fluoride ($PbF_2$).

(Effect)

The present invention has found that it is possible to determine an optimum scavenger additive condition, based on a damage resistance evaluation obtained by irradiating X-rays to a fluoride raw material such as calcium fluoride, barium fluoride, magnesium fluoride, or the like obtained through a melt process as a pre-process for a single crystal growth process, and by measuring transmittances of the fluoride material before and after the irradiation of X-rays.

X-ray resistant properties are deteriorated, when impurities are left in fluoride. X-ray resistant properties can be estimated by conducting X-ray irradiation, and by measuring a change between light transmittances before and after the X-ray irradiation.

The change of light transmittance may be evaluated by $\mu(\lambda)$ defined by the following equation:

$$\mu(\lambda) = 1/\ln(T_0(\lambda)/T_{irr}(\lambda))$$

$\mu$: optical-absorption coefficient
$T_0$: light transmittance before X-ray irradiation
Tirr: light transmittance after X-ray irradiation
X-rays (wavelength: 0.05 to 0.25nm) to be used, may be white X-rays or characteristic X-rays.

Different fluoride materials lead to different types of impurities (color centers) which deteriorate X-ray resistant properties, respectively. Components of scavengers themselves may act as impurities.

In case of studying as to which scavengers are preferable, there is sampled a specimen obtained after addition of scavenger and conduction of melting, such that the sampled specimen is subjected to irradiation of X-rays so as to measure light transmittances before and after the irradiation, thereby making it possible to know as to which scavengers are preferable.

BRIEF DESCRIPTION OF DRAWINGS

FIG. 1 is a graph of change in light transmittance by X-ray irradiation to calcium fluoride.
FIG. 2 is a graph of change in light transmittance by X-ray irradiation to barium fluoride in case of addition of scavenger (lead fluoride).
FIG. 3 is a graph of change in light transmittance by X-ray irradiation to barium fluoride in case of addition of scavenger (zinc fluoride).
FIG. 4 is a graph of change in light transmittance by X-ray irradiation in case of addition of scavenger (carbon tetrafluoride) into fluorides (barium fluoride) matured from powdery raw materials different in purity.
FIG. 5 is graph of change in light transmittance by X-ray irradiation to fluoride (barium fluoride) in case of addition of the various scavengers thereto.

BEST MODE FOR CARRYING OUT THE INVENTION

The method is configured to load a powdery fluoride raw material developed for lithography, for example, calcium fluoride, into a high purity carbon crucible, and to melt the raw material in a resistive heating type melting furnace which is provided with a high vacuum evacuation device and which is capable of controlling an ambient atmosphere. High vacuum evacuation is conducted after loading the raw material, and heating is started after confirming that a degree of vacuum has reached $1 \times 10^{-3}$ Pa or lower, thereby melting the raw material. It is conducted under high vacuum until termination, in case of using lead fluoride, zinc fluoride, or the like which is a solid scavenger. In turn, $CF_4$ gas is injected, for example, before melting, in case of using a gaseous scavenger such as $CF_4$.

The thus obtained fused transparent and colorless raw material is cut into a piece of a predetermined size, and subjected to mirror grinding. This sample is further subjected to annealing at 400°C for 1 hour (and 2 hours each for temperature elevation and drop), so as to bring captured electrons and the like back to original levels, respectively, to resume an initial state.

Next, there is measured an initial transmittance over a range of 190 to 800nm by a visible/ultraviolet spectroscope. Thereafter, X-rays are irradiated under an irradiative condition 1. There is measured a transmittance just after the irradiation by the same spectroscope, and then X-rays are irradiated under an irradiative condition 2. Further, there is measured a transmittance just after the irradiation, and then X-rays are irradiated under an irradiative condition 3 to thereby measure a transmittance again.

The thus obtained measurement results are assigned to the following equation to obtain absorption coefficients which are then plotted in graph.

$$\mu(\lambda) = 1/\ln(T_0(\lambda)/T_{irr}(\lambda))$$

$\mu$: optical-absorption coefficient
$T_0$: light transmittance before X-ray irradiation
$T_{irr}$: light transmittance after X-ray irradiation

Table 1 shows the X-ray irradiative conditions.

(Table 1)

|    | Voltage/kV | Current/mA | Radiation time |
|----|-----------|-----------|----------------|
| D1 | 25        | 15        | 10min          |
| D2 | 25        | 30        | 30min          |
| D3 | 25        | 40        | 30min          |

(Embodiment 1)

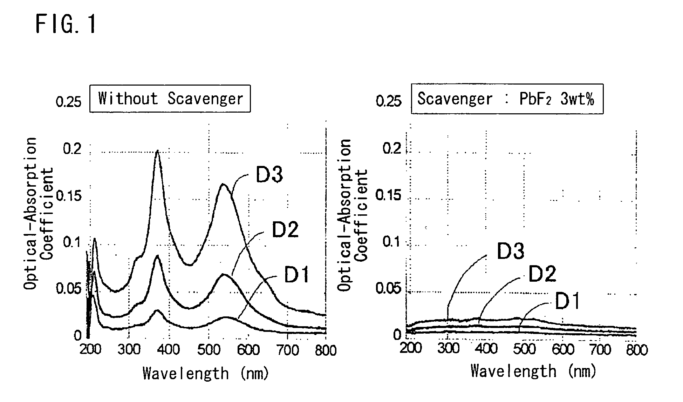

There were grown melt samples from a powdery raw material of high purity calcium fluoride, under two kinds of conditions where $PbF_2$ was adopted as a scavenger and where scavengers were not used, respectively. These samples were evaluated in X-ray damage. The result is given in FIG. 1. This clearly shows that there can be obtained a crystal excellent in damage resistance, in case of adoption of $PbF_2$ as a scavenger. Without adoption of scavengers, there are notably observed an F center (357nm) and an $F_2$ center (550nm) which are color centers specific to $CaF_2$.

(Embodiment 2)

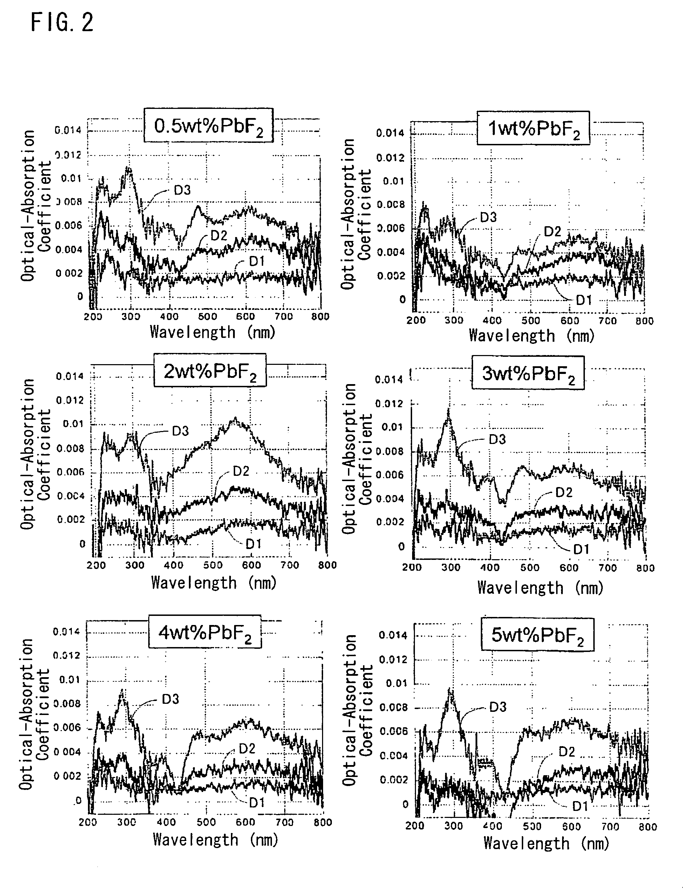

There were grown melt samples from a powdery raw material of high purity barium fluoride, while adopting $PbF_2$ as a scavenger. These were obtained under conditions that additive concentrations of $PbF_2$ were 0.5, 1, 2, 3, 4, and 5wt.%, respectively. FIG. 2 shows results of evaluation in X-ray damage for these samples. In the results, there was not seen a tendency of damage resistance depending on an additive concentration.

(Embodiment 3)

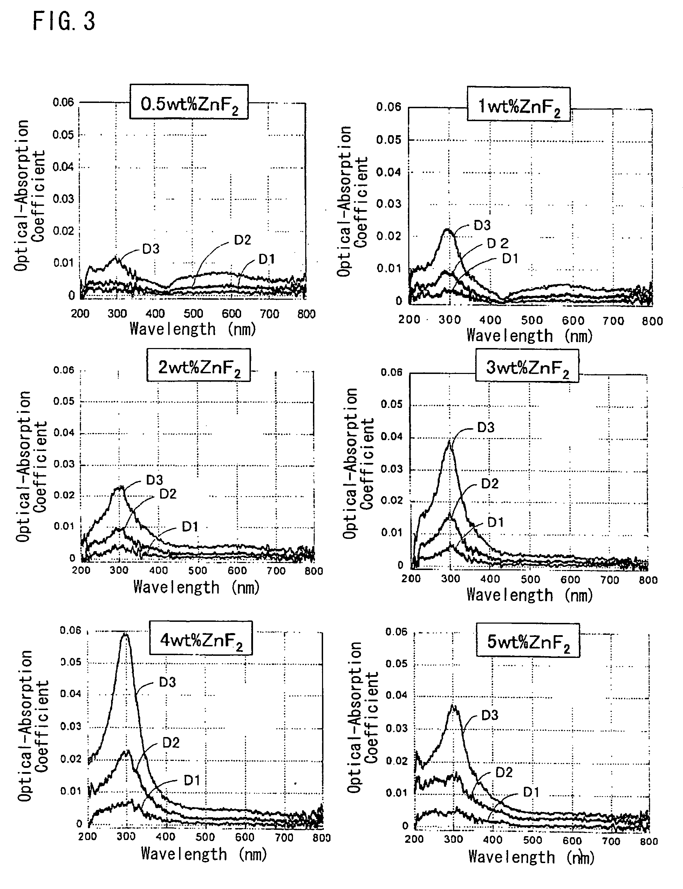

There were grown melt samples from a powdery raw material of high purity barium fluoride, while adopting $ZnF_2$ as a scavenger. These were obtained under conditions that additive concentrations of $ZnF_2$ were 0.5, 1, 2, 3, 4, and 5wt.%, respectively. FIG. 3 shows results of evaluation in X-ray damage for these samples. In the results, there was seen a tendency of damage resistance depending on an additive concentration. Measurement of residual Zn concentrations gave Table 2, so that residue thereof was confirmed, and it was confirmed that the same largely affected damage resistance.

(Embodiment 4)

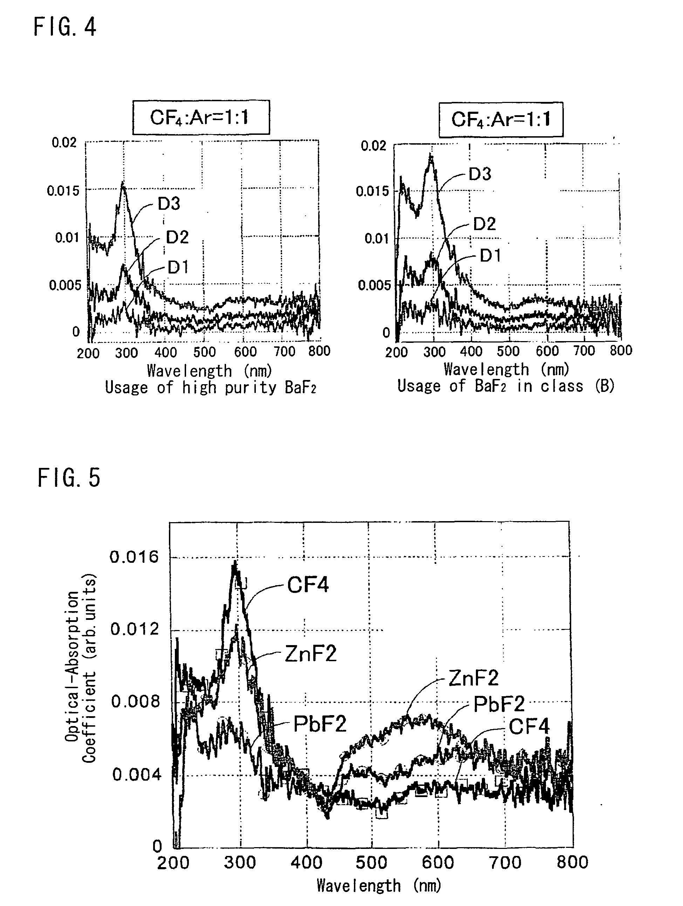

There were grown melt samples from a powdery raw material of high purity barium fluoride and a (B) powdery raw material of barium fluoride slightly low in quality, while adopting $CF_4$ as a scavenger. FIG. 4 shows results of evaluation in X-ray damage for these samples. This enabled confirmation of affection of impurities, based on the result that the adoption of high purity barium fluoride showed a more excellent damage resistance than the (B).

(Embodiment 5)

As a result of consideration to scavenger conditions of barium fluoride in embodiments 2, 3, and 4, it can be confirmed from FIG. 5 that the highest damage resistance is obtained in case of adoption of $PbF_2$.

(Table 2)

| Additive Concentration | 0.5wt.% $ZnF_2$ | 1wt.% $ZnF_2$ | 2wt.% $ZnF_2$ | 3wt.% $ZnF_2$ | 4wt.% $ZnF_2$ | 5wt.% $ZnF_2$ |
|---|---|---|---|---|---|---|
| Zn | 0.1 | 0.4 | 0.6 | 1.0 | 1.2 | 0.8 |
| (ppm) | | | | | | |

INDUSTRIAL APPLICABILITY

According to the present invention, it becomes possible to promptly optimize a melt condition including a scavenger additive condition and the like taking account of productivity for a fused raw material of fluoride, by organically combining impurity analysis, melt program, and the like with one another.

**Claims**

1. An analysis method of impurities (color centers) in fluoride **characterized in that** the method comprises the step of:

   irradiating X-rays to a material comprising fluoride, and comparing light transmittances of the material before and after the irradiation of X-rays with each other, thereby analyzing impurities (color centers) in the material.

2. The analysis method of impurities (color centers) in fluoride, **characterized in that** the fluoride is one of calcium fluoride, barium fluoride, and magnesium fluoride.

3. The analysis method of impurities (color centers) in fluoride of claim 1 or 2, **characterized in that** annealing is conducted before the X-ray irradiation.

4. The analysis method of impurities (color centers) in fluoride of claim 3, **characterized in that** the annealing is conducted at 300 to 400°C.

5. The analysis method of impurities (color centers) in fluoride of claim 3 or 4, **characterized in that** the annealing is conducted for 30 minutes to 2 hours.

6. The analysis method of impurities (color centers) in fluoride of any one of claims 1 through 5, **characterized in that** the material has a surface which is a mirror ground surface.

7. The analysis method of impurities (color centers) in fluoride of any one of claims 1 through 6, **characterized in that** the irradiation is conducted for a period of time of 5 minutes or longer.

8. The analysis method of impurities (color centers) in fluoride of any one of claims 1 through 7, **characterized in that** the X-rays are provided at an acceleration voltage of 20kV or higher and an electric current of 10mA or more.

9. The analysis method of impurities (color centers) in fluoride of any one of claims 1 through 9, **characterized in that** the X-ray irradiation is conducted multiple times.

10. The analysis method of impurities (color centers) in fluoride, **characterized in that** the material is obtained from a melt process as a pre-process for a single crystal growth process.

11. The analysis method of impurities (color centers) in fluoride of any one of claims 1 through 10, **characterized in that** the impurities are color centers formed by oxides, moisture, and the like.

12. A production method of a single crystal growth oriented material, **characterized in that** the method comprises the steps of:

   in a melt process as a pre-process for a growth process of a single crystal comprising fluoride, taking a part out of the fluoride in a fused state, and bringing the part into an analysis specimen;

analyzing impurities (color centers) of the analysis specimen by the analysis method of any one of claims 1 through 11; and
determining an additive condition of a scavenger based on a result of the analysis.

13. The production method of a single crystal growth oriented material of claim 12, **characterized in that** the fluoride is barium fluoride ($BaF_2$), and the scavenger is lead fluoride ($PbF_2$).

FIG. 1

FIG. 2

FIG. 3

FIG. 4

Usage of high purity BaF₂

Usage of BaF₂ in class (B)

FIG. 5

## EP 1 612 539 A1

## INTERNATIONAL SEARCH REPORT

| | International application No. |
|---|---|
| | PCT/JP2004/002754 |

| A. CLASSIFICATION OF SUBJECT MATTER |
|---|
| Int.Cl$^7$ G01N21/27, G01N17/00 |

According to International Patent Classification (IPC) or to both national classification and IPC

| B. FIELDS SEARCHED |
|---|
| Minimum documentation searched (classification system followed by classification symbols) |
| Int.Cl$^7$ G01N21/00-21/61, G01N17/00 |

Documentation searched other than minimum documentation to the extent that such documents are included in the fields searched

| Jitsuyo Shinan Koho | 1922-1996 | Toroku Jitsuyo Shinan Koho | 1994-2004 |
|---|---|---|---|
| Kokai Jitsuyo Shinan Koho | 1971-2004 | Jitsuyo Shinan Toroku Koho | 1996-2004 |

Electronic data base consulted during the international search (name of data base and, where practicable, search terms used)
WPI/L, JICST FILE(JOIS), Web of Science

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | H. Sato et al.: "Induced Absorption Phenomena, Thermoluminescence and Colour Centres in KMgF$_3$, BaLiF$_3$ and LiCaAlF$_6$ Complex Fluorides", Japanese Journal of Applied Physics, Vol.41, Part 1, No.4A, April 2002, pages 2028 to 2033; see section 2.2, 3.1; Fig. 1 | 1,3-9,11<br>2,10<br>12-13 |
| Y<br>A | Shin'ichiro TOZAWA et al: "Kogaku Zairyo CaF$_2$ no Kaishitsu", Tohoku University Kinzoku Zairyo Kenkyusho Gijutsubu Gijutsu Kenkyu Hokoku, ISSN: 1341-3422, No.19, March 2001, pages 29 to 32; section 2, Par. Nos. [0001] to [0002]; section 3, last Paragraph; Figs. 1, 2, 5 | 2,10<br>12-13 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 April, 2004 (06.04.04) | Date of mailing of the international search report<br>20 April, 2004 (20.04.04) |
|---|---|
| Name and mailing address of the ISA/<br>Japanese Patent Office | Authorized officer |
| Facsimile No. | Telephone No. |

Form PCT/ISA/210 (second sheet) (January 2004)

| | INTERNATIONAL SEARCH REPORT | International application No. |
|---|---|---|
| | | PCT/JP2004/002754 |

C (Continuation). DOCUMENTS CONSIDERED TO BE RELEVANT

| Category* | Citation of document, with indication, where appropriate, of the relevant passages | Relevant to claim No. |
|---|---|---|
| A | M. Brekhovskikh, et al.,: "Influence of fluoro-oxidizers on scintillation properties of fluoro-hafnate glass doped with $Ce^{3+}$", Journal of Non-Crystalline Solids, Vol.277, Issue 1, November 2000, pages 68 to 71 | 1 |
| P,A | H. Sato, et al.,: "Improvement in the quality of $LiCaAlF_6$ single crystal as window material", Oprical Materials, Vol.24, Issues 1-2 (Proceedings of the Fifth French-Israeli Workshop on Optical Properties of Inorganic Materials: 08 December, 2002 (08.12.02) – 12 December, 2002 (12.12.02), October – November, 2003; pages 123 to 127 | 1 |

Form PCT/ISA/210 (continuation of second sheet) (January 2004)